Europäisches Patentamt

European Patent Office

Office européen des brevets

(11) Publication number: **0 496 128 A1**

# EUROPEAN PATENT APPLICATION

(21) Application number: 91200153.4

(22) Date of filing: 25.01.91

(51) Int. Cl.5: **B01D 53/24**, C02F 3/28, B01D 45/16, B01D 5/00

(43) Date of publication of application:
29.07.92 Bulletin 92/31

(84) Designated Contracting States:
AT BE CH DE DK ES FR GB GR IT LI LU NL SE

(71) Applicant: STORK PRODUCT ENGINEERING B.V.
Oostenburgervoorstraat 70
NL-1018 MR Amsterdam(NL)

(72) Inventor: Van Holten, Theodoor
Utrechtseweg 43
NL-1213 TL Hilversum(NL)

(74) Representative: Hoijtink, Reinoud et al
OCTROOIBUREAU ARNOLD & SIEDSMA
Sweelinckplein 1
NL-2517 GK Den Haag(NL)

(54) Method and device for separating a gas from a gas mixture.

(57) Gas is separated out of a mixture by generating a vortex in the mixture. The mixture is first carried through a constriction and then expanded until supersonic speeds are reached. Owing to the fall in temperature the gas for separation condenses. The vortex is generated by arranging in a gas flow plate-like elements whereof the leading edge and the plane enclose a small angle with the flow direction. This is performed in a cylindrical cyclone in which transversely of the cylinder wall is placed a wing-shaped element, the leading edge and the plane of which enclose a small angle with the heart line of the cylindrical cyclone.

FIG.1

Gas can be separated out of a gas mixture using known cyclone systems. In such a cyclone system the gas is allowed to cool through use of coolants to a temperature lying below the condensation point of the component for separation, whereafter a vortex flow is generated using axial separators such that due to the centrifugal action the component for separation concentrates at the edge zone of the cyclone. In this manner a separation between component for separating and the rest of the mixture is obtained such that both fractions can be discharged separately.

The present invention has for its object to bring about an improvement herein.

This is achieved according to the invention by carrying the flow of gas mixture through a constriction and causing it to expand behind the constriction, this such that supersonic speeds are reached and the temperature in the gas mixture falls to below the condensation point of the gas for separation, and in that the vortex is generated by arranging plate-like elements in the gas flow, the leading edge and the plane of which enclose a small angle with the flow direction.

By thus transporting the gas flow through a constriction and subsequently causing it to expand supersonic speeds are reached in the gas whereby a sharp fall in temperature occurs such that desired components condense without use being made of active coolants. The supersonic speeds make use of the classical axial separator impossible. With the classical axial separator the gas inflow into the separator is tangential. In the present embodiment this is not possible. According to the invention the vortex is generated through use of a number of plate-like elements with a delta-shape. Such delta-shaped plates are comparable to delta wings as used in aircraft. The sharp leading edge and the plane thereof form a small angle with the direction of flow. This configuration produces so-called leading edge vortices, also known under the name vortex sheets.

In preference the separated product is again carried through a constriction prior to discharge thereof and then expanded. Due to the fall in speed a part of the kinetic energy is converted into an increased pressure.

The invention is further elucidated with reference to the drawing.

In the drawing:

Fig. 1 shows a diagram of the device according to the invention, and

fig. 2 is a schematic cross section at the position of the line II-II.

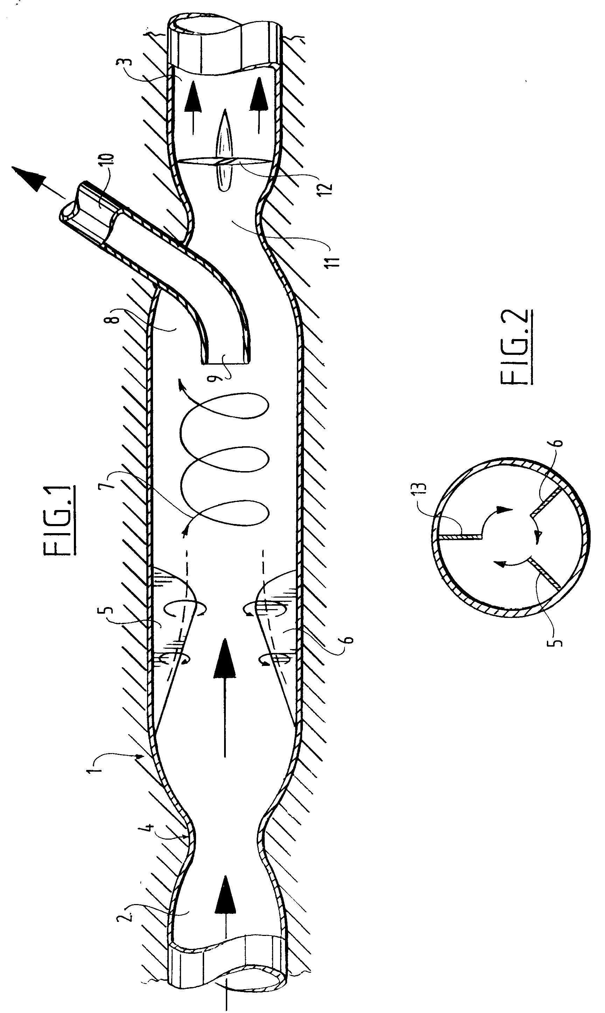

The device according to the invention consists of a cylindrical member 1 with an inlet end 2 and an outlet end 3. Arranged close to the inlet end 2 is a constriction 4 of the Laval type which seen in lengthwise direction has a converging-diverging form. The gas flow is hereby successively constricted and then expanded. During expansion the speed increases very sharply and the temperature accordingly falls to a low value. As a result of the temperature fall the component for separation can condense. The speed has meanwhile become supersonic. The eddy or vortex for the axial separation of the condensed fraction is generated by the deltoid plates 5, 6 protruding radially into the flow. Such plates have a thin leading edge and cause in known manner so-called leading edge vortices or vortex sheets. This vortex results in the desired centrifugal action in the zone 7 whereby the condensed component moves to the edge zone of the cylindrical member 1 seen in peripheral direction. Arranged in the zone 8 in the middle of the cylindrical member is the inlet 9 of a discharge pipe 10 for the rest of the gas mixture which will consist of a cleaned product. The separated fraction is again carried through a constriction in the zone 11. Behind the constriction is placed a fan 12 of a suction pump for drawing in the gas flow. Owing to the fall in kinetic energy the pressure rises to for instance approximately atmospheric value. As can be seen in fig. 2, three plates 5, 6 and 13 can for example be arranged.

## Claims

1. Method for separating a gas from a gas mixture by successively transporting the gas mixture in a flow, generating a vortex in the flow of gas mixture and extracting the condensate from the flow at the edge zone of the flow and separately discharging the condensate and the rest of the gas mixture, **characterized by** carrying the flow of gas mixture through a constriction and causing it to expand behind the constriction, this such that supersonic speeds are reached and the temperature in the gas mixture falls to below the condensation point of the gas for separation and in that the vortex is generated by arranging plate-like elements in the gas flow, the leading edge and the plane of which enclose a small angle with the flow direction.

2. Method as claimed in claim 1, **characterized in that** a thin leading edge is chosen for the plate.

3. Method as claimed in claims 1-2, **characterized in that** prior to discharge the separated product is again transported through a constriction and caused to expand.

4. Device for performing the method as claimed in one or more of the claims 1-3, consisting of a roughly cylindrical member with an inlet end and an outlet end, a constriction close to the inlet end, and behind the constriction at least one wing-shaped element which is placed transversely of the lengthwise direction of the cylindrical member and connected to the cylindrical wall and the leading edge and plane of which enclose a small angle with the centre line of the cylindrical member.

5. Device as claimed in claim 4, **characterized in that** the leading edge of the wing is a sharp edge.

6. Device as claimed in claims 4 and 5, **characterized in that** a second constriction is arranged in front of the outlet end.

7. Device as claimed in claim 6, **characterized in that** a discharge line for the separated product debouches in front of the second constriction close to the middle of the cylindrical member.

8. Device as claimed in claim 6**, characterized in that** the fan of a suction pump is placed behind the second constriction.

FIG.1

FIG.2

# EUROPEAN SEARCH REPORT

Application Number

EP 91 20 0153

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 559 373 (R.L. GARRETT) <br> * column 4, line 1 - column 5, line 50; figure 1 * | 1 | B01D53/24 <br> C02F3/28 <br> B01D45/16 |
| A | | 3 | B01D5/00 |
| | --- | | |
| Y | US-A-3 885 935 (D.E. NUTTER) <br> * column 2, line 67 - column 3, line 37; figures 1,2 * | 1 | |
| A | | 2,4 | |
| | --- | | |
| A | FR-A-2 442 651 (ROLLS-ROYCE) | | |
| | --- | | |
| A | US-A-4 311 494 (W.L. CONNER) | | |
| | --- | | |
| A | FR-A-2 057 228 (J.B. FENN) | | |
| | ----- | | |

TECHNICAL FIELDS
SEARCHED (Int. Cl.5)

B01D
C02F

The present search report has been drawn up for all claims

| Place of search | Date of completion of the search | Examiner |
|---|---|---|
| THE HAGUE | 20 SEPTEMBER 1991 | BOGAERTS M.L.M. |